# EUROPÄISCHE PATENTSCHRIFT

(11) **EP 0 995 978 B1**
(45) Veröffentlichungstag und Bekanntmachung des Hinweises auf die Patenterteilung: **08.05.2002**
(21) Anmeldenummer: 99117712.2
(22) Anmeldetag: 08.09.1999
(51) Int. Cl.: G01J 5/12

(54) **Strahlungssensor**
Radiation detector
Détecteur de radiation

(30) Priorität: 22.10.1998 DE 29818875 U
(43) Veröffentlichungstag der Anmeldung: 26.04.2000
(73) Patentinhaber: BARTEC Componenten und Systeme GmbH, 97980 Bad Mergentheim (DE)
(72) Erfinder: Böhm, Alfred, 94234 Viechtach (DE); Sturm, Walter, 94239 Zachenberg (DE); Barlian, Reinhold A., 97980 Bad Mergentheim (DE)
(74) Vertreter: Heim, Hans-Karl, Dipl.-Ing.

(56) Entgegenhaltungen:
- DE-A- 4 421 065
- PATENT ABSTRACTS OF JAPAN vol. 015, no. 338 (P-1243), 27. August 1991 (1991-08-27) & JP 03 125935 A (TOKIN CORP), 29. Mai 1991 (1991-05-29)
- PATENT ABSTRACTS OF JAPAN vol. 005, no. 179 (E-082), 17. November 1981 (1981-11-17) & JP 56 105683 A (MATSUSHITA ELECTRIC IND CO LTD), 22. August 1981 (1981-08-22)
- PATENT ABSTRACTS OF JAPAN vol. 018, no. 450 (P-1790), 22. August 1994 (1994-08-22) & JP 06 147997 A (CASIO COMPUT CO LTD), 27. Mai 1994 (1994-05-27)

## Beschreibung

Die Erfindung betrifft einen Sensor zur pyrometrischen Messung der Temperatur eines Meßobjektes nach dem Oberbegriff des Anspruchs 1.

Aus der DE 196 15 244 A1 ist ein Sensor zur strahlungspyrometrischen Messung der Temperatur eines Meßobjektes bekannt. Der Sensor weist ein zylindrisches Gehäuse auf, in welchem Thermoelemente in im wesentlichen axialer Richtung angeordnet und miteinander in Serie geschaltet sind. Die Lötstellen, welche die thermisch aktiven Elemente miteinander verbinden, liegen auf den Grundflächen des zylindrischen Körpers. Eine Kompensation von nicht strahlungsbedingten Temperaturunterschieden zwischen den Lötstellen wird dadurch erreicht, daß ein Teil der an sich der Strahlung des Meßobjektes ausgesetzten Lötstellen durch einen strahlungsundurchlässigen Schild abgedeckt sind. Zur Temperaturkompensation ist vorgesehen, ein Thermoelement im Bereich des Schildes anzuordnen, um dort die Eigentemperatur der Anordnung zu erfassen. Durch die Wahl der Materialien ist dieser Sensor auch bei hohen Temperaturen, bis zu 400°C, beständig.

Nachteilig an dem geschilderten Aufbau ist jedoch, daß die Anordnung der Thermoelemente durch die erforderliche Fädel- und Schweißtechnik äußerst kompliziert ist, was die Herstellung des Sensors sehr kostenintensiv gestaltet. Ferner ist die strahlungssensitive Fläche, bedingt durch die sehr begrenzte Anzahl an Lötstellen, gering, wodurch sich bei gegebener Strahlungsintensität ein vergleichsweise geringerer Meßeffekt ergibt, mit anderen Worten, es liegt eine geringe Empfindlichkeit vor.

Andere bekannte Sensoren, welche in Serie geschaltete Thermoelemente - sogenannte Thermopiles - verwenden, weisen häufig den Nachteil auf, daß sie nicht bei hohen Umgebungstemperaturen eingesetzt werden können. Oft liegen die Einsatztemperaturen nur zwischen 60°C bis 80°C, allenfalls bei 100°C. Die Nachteile durch diesen niedrigen Temperaturbereich lassen sich begrenzt dadurch ausgleichen, daß der jeweilige Sensor in einem größeren Abstand von dem zu vermessenden Objekt bzw. Vorgang plaziert wird. Häufig ist jedoch eine möglichst nahe Plazierung am Prozeß wünschenswert, insbesondere um hierdurch Störeffekte, beispielsweise durch Wasserdampf, zu vermeiden.

Ferner bestehen allgemeine Anforderungen an Sensoren zur strahlungspyrometrischen Messung. Generell arbeiten die Thermoelemente aufgrund einer Temperaturdifferenz zwischen ihren aktiven Bereichen. Damit der Temperatursensor eine möglichst hohe Empfindlichkeit aufweist, sollte der Warmbereich des Sensors eine möglichst geringe Wäremkapazität aufweisen, so daß bereits geringe Energieänderungen zu großen Temperaturdifferenz-Signalen führen, während der Kaltbereich eine möglichst große Wärmekapazität aufweisen sollte, um - bildlich gesprochen - eine Wärmesenke darzustellen.

So ist aus der DE 44 21 065 A1 eine Vorrichtung zur Temperaturmessung bekannt, die einen Detektor zur Umwandlung von Wärmestrahlung in ein elektrisches Signal sowie ein optisches System aufweist, das die von einem Messobjekt ausgehende Wärmestrahlung auf den Detektor abbildet. Mit Hilfe eines wärmeleitfähigen Temperaturausgleichselementes wird der Detektor und das optische System auf einer gemeinsamen Temperatur gehalten.

Die JP 56 105683 A offenbart einen Temperatursensor, der aus einer eine Apertur bildenden Substratschicht sowie einer an der Substratschicht anliegenden Folie gebildet ist. Auf der der Substratschicht abgewandten Seite der Folie sind Thermoelemente zur Temperaturbestimmung aufgebracht.

Aus der JP 03 125935 A und der JP 06 147997 A ist jeweils ein Sensor zur Temperaturmessung bekannt, der ein Thermopile mit mehreren radial angeordneten Thermoelementen aufweist. Jedes Thermoelement ist in einen ersten Bereich zum Erfassen der Wärmestrahlung und einen zweiten Bereich untergliedert, der mit einem Wärmeleiter in thermischem Kontakt steht. Die ersten Bereiche der Thermoelemente, die zum Zentrum der Anordnung zeigen, sind an ihren Enden im Zentrum der Anordnung durch ein gemeinsames IR-Strahlung absorbierendes Element aus geschwärztem Gold bedeckt. Das absorbierende Element bündelt die auf das Thermopile auftreffende Wärmestrahlung und konzentriert sie auf die von dem Element bedeckten Enden der Thermoelemente.

Der vorliegenden Erfindung liegt somit die **Aufgabe** zugrunde, vor dem Hintergrund der grundsätzlichen Anforderungen an Sensoren zur strahlungspyrometrischen Messung, einen Strahlungssensor bereitzustellen, welcher die genannten Nachteile ausräumt; insbesondere soll der Sensor bei hohen Umgebungstemperaturen einsetzbar und gleichzeitig in einfacher Weise herstellbar sein.

Diese Aufgabe wird erfindungsgemäß durch die Merkmale des Anspruches 1 gelöst.

Bei dem Sensor nach der Erfindung sind, wie bei dem gattungsgemäßen Sensor, die Thermoelemente radial angeordnet sind, wobei ihre ersten Bereiche im wesentlichen zum Zentrum der Anordnung weisen und ihre zweiten Bereiche am Rand der radialen Anordnung liegen. Dieser Aufbau ermöglicht es, einen Hochtemperatursensor in einfacher Weise zu fertigen, insbesondere unter Vermeidung der genannten Probleme im Rahmen der Fädel- und Schweißtechnik des Standes der Technik. Weiterhin ist durch die radiale Anordnung der Thermoelemente die strahlungssensitive Fläche groß, was zu einer hohen Empfindlichkeit des Sensors führt. Die radiale Anordnung der Thermoelemente ist weiterhin im Hinblick auf die Lokalisierung der Warmbereiche und der Kaltbereiche nützlich. Die Warmbereiche liegen eher im Zentrum des Aufbaus, so daß in einfacher geometrischer Anordnung diese Bereiche dem Strahlungsfeld des Meßobjektes ausgesetzt werden können. Hingegen liegen die Kaltbereiche am Rand des Thermopiles, was eine Wärmeabführung und somit das Bereitstellen einer Wärmesenke vereinfacht.

Erfindungsgemäß ist die radiale Anordnung der Thermoelemente nun beidseitig von einer temperaturbeständigen Folie bedeckt, welche einen möglichst großen Absorptionskoeffizienten im infraroten Strahlungsbereich aufweist. Eine derartige Folie schützt die empfindlichen Thermoelemente vor äußeren Einflüssen; aufgrund Ihrer Temperaturbeständigkeit steht sie dem Einsatz der Anordnung bei hohen Temperaturen nicht im Wege. Der große Absorptionskoeffizient ist nützlich, damit die bestrahlte Fläche, welche von der Folie bedeckt wird, bei gegebener Strahlungsenergie möglichst stark erwärmt wird. Insbesondere kann durch einen hohen Absorptionskoeffizienten der Folie selbst auf eine zusätzliche IR-Absorptionsschicht verzichtet werden. Die genannten Eigenschaften der temperaturbeständigen Folie liegen beispielsweise bei einer Polyimidfolie vor. Diese ist äußerst temperaturbeständig, und ihr Absorptionskoeffizient ist im interessierenden Bereich relativ hoch.

Besonders vorteilhaft ist es, wenn die Thermoelemente des Thermopiles in einem Hochtemperaturkleber eingebettet sind, welcher im Bereich von 200°C polymerisiert. Dies erlaubt einerseits den Einsatz bei hoher Temperatur, andererseits verleiht der Kleber der Anordnung die erforderliche Stabilität. Eine solche Polymerisation führt zu einer weiteren Erhöhung des Absorptionsgrades und somit zu einer weiteren Verbesserung der Eigenschaften des Sensors.

Vorzugsweise hat die Anordnung aus Thermoelemten, Hochtemperaturkleber und temperaturbeständiger Folie eine Dicke im Bereich von 120 µm. Diese geringe Dicke ermöglicht es, der Anforderung an eine möglichst geringe Wärmekapazität im bestrahlten Bereich gerecht zu werden.

Bevorzugt steht der Wärmeleiter topfartig in thermischem Kontakt zu dem Randbereich der radialen Anordnung, und er besteht aus einem Metall mit hoher Wärmekapazität und geringem Emissionsgrad, wobei die Innenseite des topfartigen Wärmeleiters verspiegelt oder poliert ist. Auf diese Weise ist es möglich, einerseits eine große Materialmenge und somit eine große, an den Kaltstellen erforderliche, Wärmekapazität zur Verfügung zu stellen, andererseits, aufgrund des Hohlraums im Inneren der topfartigen Anordnung die strahlungssensitive Fläche des Thermopiles möglichst unbeeinflußt zu lassen. Aufgrund der hohen Wärmekapazität ist der Temperaturausgleich im Randbereich des Thermopiles besonders günstig bereitzustellen; der geringe Emissionsgrad verhindert eine übermäßige Strahlungseinwirkung auf den sensitiven Bereich, was das Meßergebnis insgesamt verbessert.

Bevorzugt weisen die in Serie geschalteten Thermoelemente einen radial nach außen führenden Anschlußbereich auf, und der topfartige Wärmeleiter weist in dem Anschlußbereich der Thermoelemente eine Ausnehmung auf. Damit liegen die Anschlüsse in einem Bereich, welcher nicht der Strahlung des Meßobjektes ausgesetzt ist, was wiederum eine Beeinflussung des Meßergebnisses ausschließt. Die Gefahr eines Kurzschlusses der Anschlußleitungen wird aufgrund des metallischen Wärmeleiters ausgeschlossen.

Besonders vorteilhaft ist es, wenn das Thermopile und der Wärmeleiter in einem Gehäuse angeordnet sind, das auf der dem Meßobjekt zugewandten Seite durch eine Frontplatte verschlossen ist, welche eine IR-strahlungsdurchlässige Öffnung aufweist, wobei das Thermopile im Bereich der Öffnung der Frontplatte durch eine Scheibe abgedeckt ist, welche IR-strahlungsdurchlässig ist. Damit wird der Sensor handhabbar, und die empfindlichen Bauteile sind wirkungsvoll geschützt. Eine strahlungsdurchlässige Öffnung in der Frontplatte ermöglicht einen variablen öffnungswinkel und somit eine Optimierung der Meßfunktionen. Durch die Undurchlässigkeit für IR-Strahlung kann einerseits die zu vermessende Strahlung von dem Meßobjekt zu dem Thermopile gelangen, andererseits ist das Thermopile vor äußeren Einflüssen geschützt.

Etwa kann die Scheibe, mit welcher das Thermopile abgedeckt ist, im IR-Bereich selektiv strahlungsdurchlässig sein. Damit ist es möglich, den Sensor spektral begrenzt einzusetzen.

Um weitgehend das gesamte IR-Spektrum zu erfassen, wird als abdeckende Scheibe bevorzugt eine Siliziumscheibe verwendet. Ebenfalls können beispielsweise Scheiben aus Germanium oder Bariumfluorit verwendet werden.

Für besondere Meßaufgaben kann das Meßfeld auch durch optische Hilfsmittel verändert werden.

Ferner kann nützlich sein, wenn im Bereich der Öffnung eine Freiblaseinrichtung vorgesehen ist, insbesondere um das Beschlagen oder Verschmutzen der Scheibe, welche einen möglichst ungehinderten Strahlungsdurchgang ermöglichen soll, zu verhindern.

Zur Erhöhung der Meßempfindlichkeit kann das Gehäuse evakuiert oder mit einem Inertgas gefüllt werden.

Bei bevorzugten Ausführungformen der vorliegenden Erfindung werden Cu/CuNi-Thermoelemente verwendet.

Die Anschlußleitungen sind mit den Thermoelementen und dem Temperaturfühler zum Ermitteln der Temperatur des Wärmeleiters vorzugsweise über Hartlötstellen verbunden. Diese Maßnahme ist besonders beim Hochtemperatureinsatz des Sensors nützlich.

Der Erfindung liegt die überraschende Erkenntnis zugrunde, daß ein einfach zu fertigender Sensor bereitgestellt werden konnte, wobei dieser zuverlässig im Hochtemperaturbereich einsetzbar ist.

Die Erfindung wird mit Bezug auf die begleitenden Zeichnungen anhand einer bevorzugten Ausführungsform beispielhaft erläutert. Dabei zeigt:
- Fig. 1: eine Aufsicht auf ein Thermopile, welches bei dem erfindungsgemäßen Sensor zum Einsatz kommt;
- Fig. 2: einen Schnitt durch ein Thermopile gemäß Fig.1;
- Fig. 3: eine Aufsicht auf ein Thermopile gemäß Fig. 1, wobei funktionelle Bereiche markiert sind; und
- Fig. 4: einen Schnitt durch einen erfindungsgemäßen Sensor.

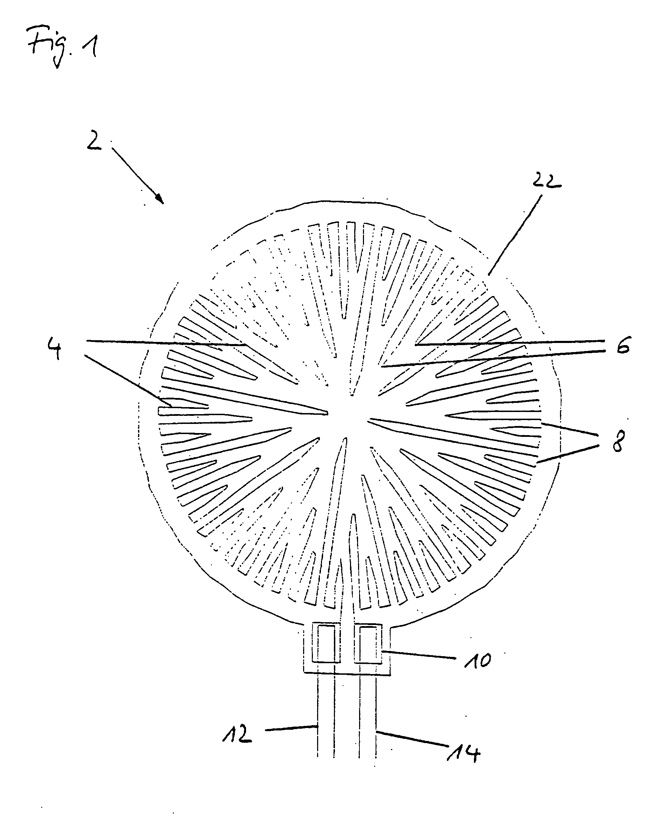

Fig. 1 zeigt eine Aufsicht auf ein Thermopile 2, welches bei einem Sensor gemäß der vorliegenden Erfindung zum Einsatz kommt. Das Thermopile 2 weist elektrisch in Serie geschaltete Thermoelemente 4 auf. Die zum Zentrum des Thermopiles weisenden Spitzen der Thermoelemente 4 sind die Warmstellen 6 der Thermoelemente 4, während die im Randbereich liegenden Kontaktstellen der Thermoelemente 4 die entsprechenden Kaltstellen 8 darstellen. Das Thermopile 2 ist beidseitig von einer hitzebeständigen Folie 22 bedeckt. Am Anschlußbereich 10 der Thermoelemente 4 des Thermopiles 2 sind über Hartlötverbindungen oder Schweißverbindungen zwei Anschlußlitzen bzw. Drähte 12, 14 elektrisch leitend angeordnet.

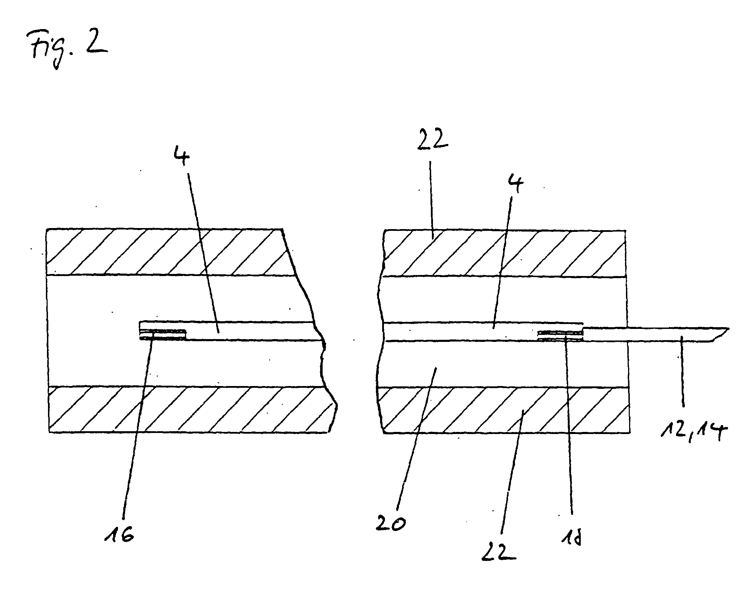

Fig. 2 zeigt einen Schnitt durch das in Fig. 1 dargestellten Thermopile 2, etwa in Richtung der Anschlußdrähte 12, 14. Dargestellt sind zwei Schenkel von Thermoelementen 4, sowie deren Kontaktstellen 16, 18. Die Thermoelemente sind in einem Hochtemperaturkleber 20 eingebettet. An einem der Schenkel der Thermoelemente 4 ist ein Anschlußdraht 12, 14 dargestellt. Beidseitig ist der Thermopile 2 von einer hitzebeständigen Folie 22, vorzugsweise aus Polyimid, bedeckt. Während die Klebeschicht 20 insgesamt eine Dicke von ca. 60 - 70 µm aufweist, hat die Folie 22 eine Dicke von etwa 25 µm. Die Thermoelemente 4 weisen eine Dicke von ca. 10 µm auf.

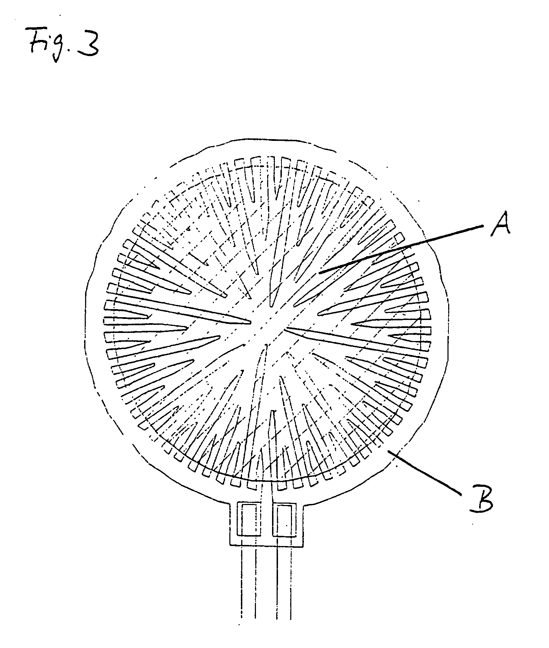

Fig. 3 ist eine Darstellung, welche im wesentlichen der Darstellung aus Fig. 1 entspricht. Zusätzlich ist durch die Schraffierung A der Bereich des Thermopiles 2 angedeutet, welcher der Strahlung des Meßobjektes ausgesetzt ist und diese aufnimmt. Der Bereich B zeigt die Wärmesenke (Vergleichsstelle). Der Bereich A weist bei noch vertretbarer Stabilität des Detektors eine möglichst geringe Wärmekapazität auf, während im Bereich B eine möglichst große Wärmekapazität vorliegen sollte. Durch letztere Maßnahme soll eine Wärmesenke bereitgestellt werden, in welcher eine möglichst homogene Temperaturverteilung vorliegt. Um Störeinflüsse zu eliminieren, wird die Temperatur der in dem Bereich B verwirklichten Wärmesenke über einen in Fig. 3 nicht gezeigten Temperaturfühler erfaßt.

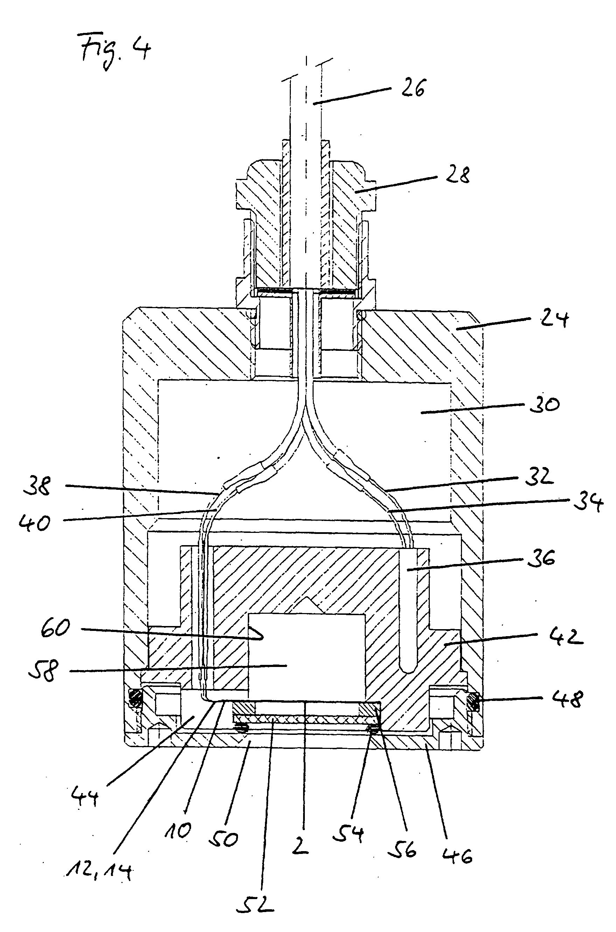

Fig. 4 zeigt einen Schnitt durch den Gesamtaufbau des erfindungsgemäßen Sensors. Der Sensor weist ein Gehäuse 24 auf, in welches an einer Seite über ein temperaturbeständiges Kabel 26 die erforderlichen elektrischen Zuleitungen eingeführt werden. Das Kabel 26 gelangt über eine PG-Verschraubung 28 (Panzergewinde-Verschraubung) in den Innenbereich 30 des Gehäuses 24. Die Abdichtung im Bereich der PG-Verschraubung 28 erfolgt durch einen Synthesekautschuk, welcher bis zu einer Temperatur von 250°C eine zuverlässige Dichtheit gewährleistet. Zwei der über das Kabel 26 in das Gehäuse 24 eingeführten Zuleitungen 32, 34 kontaktieren einen Temperaturfühler 36, während die anderen beiden Zuleitungen 38, 40 in den in Fig. 1 dargestellten Anschlußlitzen 12, 14 enden und den Anschlußbereich 10 des Thermopiles 2 kontaktieren. Der Temperaturfühler 36 sitzt in oder an dem Vergleichsstellenblock oder Isothermalblock 42, welcher die Kaltstellen 8 (vgl. Fig. 1 und Fig. 3) rundum abdeckt und für eine gleichmäßige Temperaturverteilung sorgt. Im Anschlußbereich 10 des Thermopiles 2 weist der topfartige Isothermalblock 42 eine Ausnehmung 44 auf, um ein Kurzschließen der Anschlußlitzen 12, 14 durch den metallischen, als Wärmeleiter wirkenden Isothermalblock 42 zu vermeiden.

Der Isothermalblock 42 wird durch eine Frontplatte 46 gegen das Gehäuse 24 gedrückt und somit fixiert. Eine Dichtung 48 dichtet die Frontplatte 46 gegen das Gehäuse 44 ab. Diese vorzugsweise aus Synthesekautschuk bestehende Dichtung 48 stellt unter anderem sicher, daß keine Feuchtigkeit zwischen Frontblende 46 und der Wand des Gehäuses 24 eindringen kann. In der Frontplatte 46 ist eine Öffnung 50 vorgesehen, durch welche von einem Meßobjekt ausgesendete Strahlung hindurchtreten kann, um auf das Thermopile 2 aufzutreffen. Um das Eindringen von Schmutz, Dämpfen und Feuchtigkeit zu vermeiden, ist eine Siliziumscheibe 52 - oder eine andere, wenigstens teilweise für IR-Strahlung durchlässige Scheibe - vorgesehen, welche zwischen einem Dichtungsring 54, - vorzugsweise aus Synthesekautschuk - und einem Lagerring 56, - vorzugsweise aus glasfaserverstärktem PTFE - eingeklemmt ist.

Der Lagerring 56 drückt das Folienthermopile 2 gegen den Isothermalblock 42, wodurch ein möglichst guter thermischer Kontakt zwischen der Vergleichsstelle an dem Folienthermopile 2 und dem Isothermalblock 42 hergestellt wird. Der freie Raum 58 hinter dem Folienthermopile 2 stellt sicher, daß der Einfluß des Isothermalblockes 42 auf die strahlungssensitive Fläche des Folienthermopiles 2 möglichst gering ist. Der Isothermalblock 42 sollte aus einem Metall bestehen, welches eine hohe Wärmeleitfähigkeit und einen geringen Emissionsgrad aufweist. Damit wird einerseits die erforderliche Wärmekapazität an der Vergleichsstelle des Thermopiles 2 bereitgestellt, andererseits wird der Einfluß auf die sensitive Fläche des Thermopiles 2 begrenzt. Um diesen Effekt zu unterstützen, ist der an den freien Raum 58 angrenzende Bereich 60 des Isothermalblockes 42 vorzugsweise verspiegelt oder glänzend poliert.

Aufgrund der Begrenzung der Fläche des Thermopiles 2 durch die Öffnung 50 in der Frontplatte 46 sind Flächenmessungen von z.B. Stoffbahnen, Kunststoffolien etc. möglich. Es sind zahlreiche Variationen der Gesamtanordnung denkbar; beispielsweise könnten auch optische Hilfsmittel zur Erzeugung eines veränderten Meßfeldes zum Einsatz kommen. Ebenfalls ist der Einsatz von Freiblaseinrichtungen denkbar, um so ein Beschlagen und/oder Verschmutzen der strahlungsdurchlässigen Scheibe 52 zu verhindern.

Unter Verwendung der genannten Materialien ist ein Einsatz des erfindungsgemäßen Sensors in einem Bereich bis zu etwa 250 C möglich. Bei Verwendung anderer Dichtungs- bzw. Isolationsmaterialien darf die Umgebungstemperatur bis ca. 400°C betragen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Sensor zur pyrometrischen Messung der Temperatur eines Meßobjektes, mit
- einem Thermopile (2), das mehrere in Serie geschaltete, radial angeordnete Thermoelemente (4) aufweist, welche jeweils erste Bereiche (6), die der von einem Meßobjekt ausgesandten Strahlung ausgesetzt sind, sowie zweite Bereiche (8) umfassen, die mit einem Wärmeleiter (42) in thermischem Kontakt stehen, wobei die ersten Bereiche (6) im wesentlichen zum Zentrum der Anordnung zeigen und die zweiten Bereiche (8) am Rand der radialen Anordnung liegen, und
- einem Temperaturfühler (36) zum Ermitteln der Temperatur des Wärmeleiters (42),
**dadurch gekennzeichnet,**
- **daß** die radiale Anordnung von Thermoelementen (4) beidseitig von einer temperaturbeständigen Folie (22) bedeckt ist, welche einen möglichst großen Absorptionskoeffizienten im infraroten Strahlungsbereich aufweist.

2. Sensor nach Anspruch 1,
**dadurch gekennzeichnet,**
**daß** die temperaturbeständige Folie eine Polyimidfolie ist.

3. Sensor nach Anspruch 1 oder 2,
**dadurch gekennzeichnet,**
**daß** die Thermoelemente (4) in einem Hochtemperaturkleber (20) eingebettet sind, welcher im Bereich von 200 polymerisiert.

4. Sensor nach Anspruch 3,
**dadurch gekennzeichnet,**
**daß** die Anordnung aus Thermoelementen (4), Hochtemperaturkleber (20) und temperaturbeständiger Folie (22) eine Dicke von etwa 120 µm aufweist.

5. Sensor nach einem der vorangehenden Ansprüche,
**dadurch gekennzeichnet,**
**daß** der Wärmeleiter (42) topfartig in thermischem Kontakt zu dem Randbereich (B) der radialen Anordnung steht und aus einem Metall mit hoher Wärmekapazität und geringem Emissionsgrad besteht, wobei die Innenseite des topfartigen Wärmeleiters (42) verspiegelt oder poliert ist.

6. Sensor nach einem der vorangehenden Ansprüche,
**dadurch gekennzeichnet,**
**daß** die in Serie geschalteten Thermoelemente (4) einen radial nach außen führenden Anschlußbereich (10) aufweisen und daß der topfartige Wärmeleiter (42) in dem Anschlußbereich (10) eine Ausnehmung (44) aufweist.

7. Sensor nach einem der vorangehenden Ansprüche,
**dadurch gekennzeichnet,**
**daß** das Thermopile (2) und der Wärmeleiter (42) in einem Gehäuse (24) angeordnet sind, das auf der dem Meßobjekt zugewandten Seite durch eine Frontplatte (46) verschlossen ist, welche eine IR-strahlungsdurchlässige Öffnung (50) aufweist, wobei das Thermopile im Bereich der Öffnung (50) der Frontplatte (46) durch eine IR-strahlungsdurchlässige Scheibe (52) abgedeckt ist.

8. Sensor nach Anspruch 7,
**dadurch gekennzeichnet,**
**daß** die Scheibe (52) im IR-Bereich selektiv strahlungsdurchlässig ist.

9. Sensor nach Anspruch 8,
**dadurch gekennzeichnet,**
**daß** die Scheibe (52) eine Silizium-, Germanium-, Bariumfluoridscheibe oder dergleichen ist.

10. Sensor nach einem der vorangehenden Ansprüche,
**dadurch gekennzeichnet,**
**daß** das Meßfeld durch optische Hilfsmittel veränderbar ist.

11. Sensor nach einem der Ansprüche 7 bis 10,
**dadurch gekennzeichnet,**
**daß** im Bereich der Öffnung (50) eine Freiblaseinrichtung vorgesehen ist, insbesondere um Beschlagen und/oder Verschmutzen der Scheibe (52) zu verhindern.

12. Sensor nach einem der ansprüche 7 bis 11,
**dadurch gekennzeichnet,**
**daß** das Gehäuse (42) evakuiert oder mit Inertgas gefüllt ist.

13. Sensor nach einem der vorangehenden Ansprüche,
**dadurch gekennzeichnet,**
**daß** Cu/CuNi-Thermoelemente (4) vorgesehen sind.

14. Sensor nach einem der vorangehenden Ansprüche,
**dadurch gekennzeichnet,**
**daß** die Anschlußleitungen (12, 14, 32, 34, 38, 40) mit den Thermoelementen (4) und mit dem Temperaturfühler (36) zum Ermitteln der Temperatur des Wärmeleiters (42) über Hartlötstellen oder Schweißstellen verbunden sind.

## Claims

1. Sensor for the pyrometric measurement of the temperature of a measurement object having a thermopile (2), which has several series-connected, radially arranged thermocouples (4), which in each case comprise first areas, which are exposed to the radiation emitted by a measurement object, as well as second areas (8) which are in thermal contact with a heat conductor (42), the first areas (6) being essentially directed towards the centre of the arrangement and the second areas (8) are located at the edge of the radial arrangement, as well as a temperature sensor (36) for determining the temperature of the heat conductor (42), **characterized in that** the radial arrangement of thermocouples (4) is covered on both sides by a heat resistant film (22), which has a maximum absorption coefficient in the infrared radiation range.

2. Sensor according to claim 1, **characterized in that** the heat resistant film is a polyimide film.

3. Sensor according to claim 1 or 2, **characterized in that** the thermocouples (4) are embedded in high temperature adhesive (20), which is polymerized at around 200°C.

4. Sensor according to claim 3, **characterized in that** the arrangement of thermocouples (4), high temperature adhesive (20) and heat resistant film (22) has a thickness of approximately 120 µm.

5. Sensor according to one of the preceding claims, **characterized in that** in pot-like manner the heat conductor (42) is in thermal contact with the marginal area (B) of the radial arrangement and is made from a metal with a high heat capacity and low emission rate, the inside of the pot-like heat conductor (42) being silvered or polished.

6. Sensor according to one of the preceding claims, **characterized in that** the series-connected thermocouples (4) have a radially outwardly leading connection area (10) and that the pot-like heat conductor (42) has a recess (44) in the connection area (10).

7. Sensor according to one of the preceding claims, **characterized in that** the thermopile (2) and heat conductor (42) are placed in a casing (24), which is closed on the side facing the measurement object by a front panel (46), which has an IR radio-transparent opening (50), the thermopile being covered in the vicinity of the opening (50) of the front panel (46) by an IR radio-transparent disk (52).

8. Sensor according to claim 7, **characterized in that** in the IR range the disk (52) is selectively radio-transparent.

9. Sensor according to claim 8, **characterized in that** the disk (52) is a silicon, germanium, barium fluoride or similar disk.

10. Sensor according to one of the preceding claims, **characterized in that** the measuring field is variable by optical aids.

11. Sensor according to one of the claims 7 to 10, **characterized in that** in the vicinity of the opening (50) a blow-free device is provided, particularly in order to prevent misting and/or dirtying of the disk (52).

12. Sensor according to one of the claims 7 to 11, **characterized in that** the casing (42) is evacuated or filled with inert gas.

13. Sensor according to one of the preceding claims, **characterized in that** Cu/CuNi thermocouples (4) are provided.

14. Sensor according to one of the preceding claims, **characterized in that** the connecting leads (12, 14, 32, 34, 38, 40) are connected to the thermocouples (4) and to the temperature sensor (36) by means of brazing or welding joints for determining the temperature of the heat conductor (42).

## Revendications

1. Capteur pour la mesure pyrométrique de la température d'un objet de mesure avec :
- une thermopile (2), qui comprend plusieurs thermoéléments (4) disposés radialement et montés en série, qui comprennent chacun des premières zones (6) qui sont exposées au rayonnement émis par un objet de mesure, ainsi que des deuxièmes zones (8) qui sont en contact thermique avec un conducteur thermique (42), les premières zones (6) étant orientées pour l'essentiel vers le centre de l'agencement et les deuxièmes zones (8) étant situées au bord de l'agencement radial, et
- un capteur de température (36) pour déterminer la température du conducteur thermique (42),
***caractérisé en ce que***
- l'agencement radial des thermoéléments (4) est recouvert des deux côtés par une feuille thermorésistante (22), qui présente un coefficient d'absorption le plus élevé possible dans la plage de rayonnement infrarouge.

2. Capteur selon la Revendication 1, ***caractérisé en ce que*** la feuille thermorésistante est une feuille en polyimide.

3. Capteur selon la Revendication 1 ou 2, ***caractérisé en ce que*** les thermoéléments (4) sont noyés dans un adhésif haute température (20) qui est polymérisé autour de 200°C.

4. Capteur selon la revendication 3, ***caractérisé en ce que*** l'agencement constitué des thermoéléments (4), de l'adhésif haute température (20) et de la feuille thermorésistante (22), présente une épaisseur d'environ 120 µm.

5. Capteur selon l'une quelconque des Revendications précédentes, ***caractérisé en ce que*** le conducteur thermique (42) se trouve, à la manière d'un pot, en contact thermique avec la zone de bord (B) de l'agencement radial et se compose d'un métal à grande capacité thermique et faible degré d'émission, la face intérieure du conducteur thermique (42) en forme de pot étant polie ou rendue réfléchissante.

6. Capteur selon l'une quelconque des Revendications précédentes, ***caractérisé en ce que*** les thermoéléments (4) montés en série présentent une zone de raccordement (10) conduisant radialement vers l'extérieur, et ***en ce que*** le conducteur thermique (42) en forme de pot présente un évidement (44) dans la zone de raccordement (10).

7. Capteur selon l'une quelconque des Revendications précédentes, ***caractérisé en ce que*** la thermopile (2) et le conducteur thermique (42) sont placés dans un boîtier (24), qui est fermé, du côté orienté vers l'objet de mesure, par une plaque frontale (46) qui présente une ouverture (50) transparente au rayonnement IR, la thermopile étant couverte au niveau de l'ouverture (50) de la plaque frontale (46) par un disque (52) transparent aux IR.

8. Capteur selon la Revendication 7, ***caractérisé en ce que*** le disque (52) présente une transparence au rayonnement sélective dans le domaine IR.

9. Capteur selon la Revendication 8, ***caractérisé en ce que*** le disque (52) est un disque de silicium, de germanium ou de fluorure de baryum ou analogue.

10. Capteur selon l'une quelconque des Revendications précédentes, ***caractérisé en ce que*** le champ de mesure peut être modifié par des moyens optiques.

11. Capteur selon l'une quelconque des Revendications 7 à 10, ***caractérisé en ce qu***'il est prévu, au niveau de l'ouverture (50), un dispositif de nettoyage par soufflage afin d'empêcher un dépôt et/ou un encrassement du disque (52).

12. Capteur selon l'une quelconque des Revendications 7 à 11, ***caractérisé en ce que*** le boîtier (42) est mis sous vide ou rempli de gaz inerte.

13. Capteur selon l'une quelconque des Revendications précédentes, ***caractérisé en ce que*** des thermoéléments Cu/CuNi (4) sont prévus.

14. Capteur selon l'une quelconque des Revendications précédentes, ***caractérisé en ce que*** le les lignes de raccordement (12, 14, 32, 34, 38, 40) sont reliés aux thermoéléments (4) et au capteur de température (36) pour déterminer la température du conducteur thermique (42) par l'intermédiaire de brasures ou de soudures.
